Europäisches Patentamt

European Patent Office

Office européen des brevets

(11) Veröffentlichungsnummer : **0 221 097**
**B1**

(12) # EUROPÄISCHE PATENTSCHRIFT

(45) Veröffentlichungstag der Patentschrift :
13.12.89

(21) Anmeldenummer : 86902393.7

(22) Anmeldetag : 02.04.86

(86) Internationale Anmeldenummer :
PCT/EP 86/00200

(87) Internationale Veröffentlichungsnummer :
WO/8606537 (06.11.86 Gazette 86/24)

(51) Int. Cl.⁴ : **G 11 B 33/08, G 11 B 19/20**

(54) ELASTISCHE LAGERUNG MIT EINSTELLBARER DÄMPFUNG FÜR SCHALLPLATTENSPIELER.

(30) Priorität : 19.04.85 DE 3514164

(43) Veröffentlichungstag der Anmeldung :
13.05.87 Patentblatt 87/20

(45) Bekanntmachung des Hinweises auf die Patenterteilung : 13.12.89 Patentblatt 89/50

(84) Benannte Vertragsstaaten :
AT BE CH DE FR GB IT LI LU NL SE

(56) Entgegenhaltungen :
EP--A-- 0 014 058
DE--A-- 2 547 849
GB--A-- 792 181
GB--A-- 1 048 369
GB--A-- 2 063 547
GB--A-- 2 143 299
US--A-- 1 866 274
Patents Abstracts of Japan,Band 7,Nr.168,(P-
212)(1313) 23.Juli 1983 & JP,A,5873001
Funkschau,Band 36,Heft 18,2.September
1964,München (DE) H.J.Haase:"Konstruktionsfeinheiten eines Hi-Fi-Plattenspielers" Seiten 495-496

(73) Patentinhaber : Deutsche Thomson-Brandt GmbH
Hermann-Schwer-Strasse 3 Postfach 1307
D-7730 Villingen-Schwenningen (DE)

(72) Erfinder : KAISER, Bernhard
Im Sänget 26
D-7742 St. Georgen-Peterzell (DE)

## Beschreibung

Die Erfindung betrifft eine elastische Chassis- und/oder Gehäuselagerung nach dem Oberbegriff des Hauptanspruchs.

Bekanntlich muß das Chassis oder Gehäuse eines Schallplattenspielers durch Elastizitäten von der Stellfläche des Gerätes entkoppelt sein. Das ist nötig, um zu verhindern, daß mögliche Erschütterungen der Stellfläche auf die Schallplatte und/oder auf die Tonarmlagerung gelangen und so die Abtastung störend beeinflussen. Zur Entkopplung werden elastische Materialien, wie z. B. Gummi oder Zug- oder Druckfedern oder Silikonpaste verwendet. Die elastischen Daten werden dabei so gewählt, daß die Eigenresonanz der zu entkoppelnden Masse mit der effektiven Elastizität der Lagerung vorzugsweise im tiefen Frequenzbereich, z. B. bei 2 bis 10 Hz, zu liegen kommt.

Es ist ebenfalls bekannt, die Elastizitäten, die selbstverständlich eine, wenn auch geringe Eigendämpfung haben, zusätzlich mit einer größeren Dämpfung zu versehen, damit bei z. B. stoßartiger Anregung des Schwingungsgebildes nicht ein unerwünscht langer Ausschwingvorgang oder ein zu großes Überschwingen auftritt.

Beispielhaft hierfür sei die GB-A-2 063 547 genannt. Hier wird schon eine elastische Chassis- und/oder Gehäuselagerung mit Dämpfung für einen Schallplattenspieler (Seite 3, Zeilen 8-20) beschrieben, wobei zur Entkopplung elastisches Material 120, wie insbesondere Gummi, und Federn 116 zusammenarbeiten (Seite 5, Zeilen 79-98), wozu eine Feder 116 und ein Dämpfungsgummiteil 120 koaxial zueinander angeordnet sind (Seite 5, Zeilen 64-86 sowie Fig. 5). Es sind Mittel zur variablen Höheneinstellung beschrieben, jedoch ist keine Einstellung der Dämpfung vorgesehen.

In Abhängigkeit von der Größe der jeweils gewählten Dämpfung verändert sich die Absorptionsfähigkeit von sogenanntem Trittschall. Darunter versteht man tieffrequente Anregungen im Bereich unter 20 Hz, die sich durch Störungen der Wiedergabe in Form nichtlinearer Verzerrungen oder Herausspringen der Abtastnadel aus der Rille äußern.

Die Größe der Dämpfung beeinflußt auch das Verhalten des Gerätes hinsichtlich akustischer Rückkopplung, die im Bereich mittlerer Tonfrequenzen auftreten können, wenn der oder die Lautsprecher relativ nahe bei dem Schallplattenspieler aufgestellt sind und so eine Rückkopplung möglich wird.

Bei unterschiedlichen Dämpfungen der Geräte- oder Chassis-Lagerung verlaufen die Trittschall- und die Rückkopplungsempfindlichkeit gegenläufig. Eine generelle Lösung für beide Probleme ist kaum möglich, da die äußeren Bedingungen unterschiedlich starken Einfluß haben.

Der vorliegenden Erfindung lag die Aufgabe zugrunde, eine Lagerung für einen Schallplattenspieler zu konstruieren, die eine einstellbare Dämpfung aufweist, welche es dem Benutzer des Gerätes individuell ermöglicht, je nach den bestehenden Bedingungen des Aufstellortes des Gerätes und den allgemeinen akustischen Gegebenheiten hinsichtlich Trittschall und akustischer Rückkopplung eine optimale Dämpfungseinstellung zu wählen.

Diese Aufgabe wird für den angegebenen Oberbegriff des Hauptanspruchs erfindungsgemäß nach dem Kennzeichen desselben gelöst. Weitere Einzelheiten und Ausgestaltungen sind den Unteransprüchen und der Beschreibung zu entnehmen.

Mit einer elastischen Dämpfung nach der Erfindung ist der Benutzer in der Lage sowohl Trittschall- wie auch Rückkopplungseinflüsse durch eine geeignete Einstellung des Betätigungsarmes zu beeinflussen. Wenn z. B. in keinem Fall akustische Rückkopplung auftreten kann, wird er die größtmögliche Dämpfung einstellen. Wenn aber die Rückkopplungsneigung dominiert, sollte er die Dämpfung ganz oder weitgehend ausschalten.

Ein Ausführungsbeispiel der Erfindung wird an Hand der Zeichnung beschrieben. Diese zeigt in

Figur 1 eine elastische Lagerung in einer Seitenansicht, geschnitten in der Ebene der Mittelachse ;

Figur 2 eine Draufsicht, geschnitten in der Ebene A-A' der Figur 1 ;

Figur 3a und 3b zeigen den Verlauf der im Abtaster induzierten Spannung U als Funktion der Zeit und zwar bei a) ohne Dämpfung und bei b) mit großer Dämpfung.

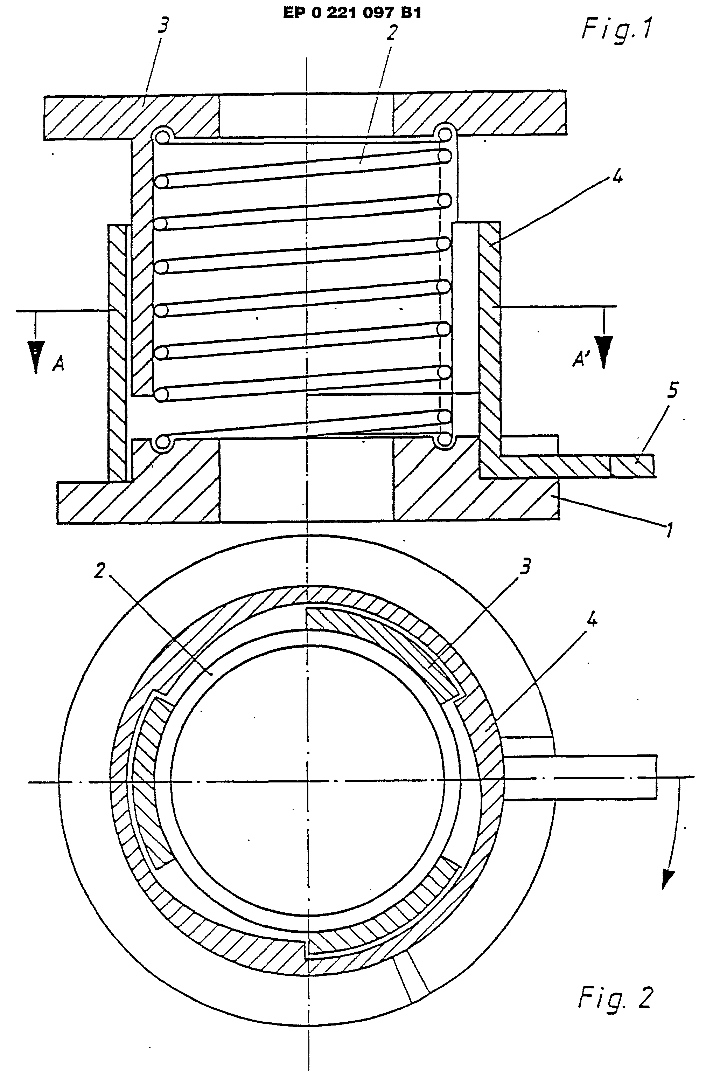

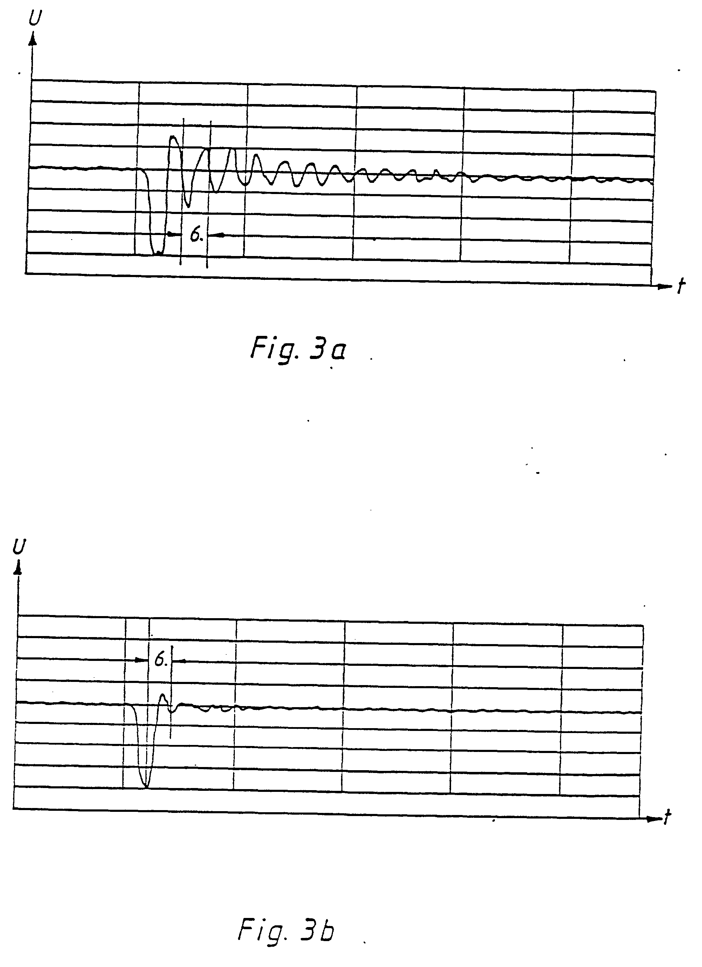

Wie Figur 1 erkennen läßt, sind eine Schraubendruckfeder 2, ein Dämpfungsgummiteil 3 und ein Stellglied 4 konzentrisch ineinander angeordnet, wobei das Stellglied 4 wie auch die Schraubendruckfeder 2 sich auf einem Flanschteil 1 abstützen. Das Dämpfungsgummiteil 3 hat ein Flanschteil mit Mittenloch und einer konzentrischen Rille, in der sich die Schraubendruckfeder 2 mit ihrem Oberteil abstützt. Das zylindermantelförmige Stellglied 4 hat Segmente mit unterschiedlicher, allmählicher Wanddickenänderung in einer Drehrichtung des Stellgliedes 4, so daß die entsprechenden Sektoren des Dämpfungsgummiteils 3 durch Drehung des Stellgliedes 4 mittels Schwenkung des angeformten, radial herausragenden Armes 5 um maximal 60° zwischen keiner und sehr großer Dämpfung einstellbar ist. Die Figur 2 läßt deutlich werden, wie die drei Segmente des Dämpfungsgummiteils 3 zwischen der innen angeordneten Schraubendruckfeder 2 und den Kurvensegmenten des Stellgliedes 4 in der Position mit keiner Dämpfung liegen. Figur 3a und 3b zeigt Kurven des Spannungsverlaufs U als Funktion der Zeit t, wenn z. B. ein Stoß auf das Gerät einwirkt, und zwar erzeugt der Stoß eine entsprechende Spannung im Abtastsystem. In Figur 3a ist der Kurvenlauf ohne Dämpfung und in Figur 3b mit großer Dämpfung aufgezeichnet.

## Patentansprüche

1. Elastische Chassis- und/oder Gehäuselagerung mit Dämpfung für einen Schallplattenspieler, wobei zur Entkopplung elastisches Material, wie insbesondere Gummi und Federn zusammenarbeiten, wozu eine Feder (2) und ein Dämpfungsgummiteil (3), koaxial zueinander angeordnet sind, dadurch gekennzeichnet, daß das Dämpfungsgummiteil (3) aus einem Flansch mit einstückig damit verbundenen zylindermantelförmigen Segmenten und einem zylindermantelförmigen Stellglied (4) mit Segmenten unterschiedlicher Wanddicke in einer Drehrichtung des Stellgliedes (4) besteht, das einen radial herausragenden Arm (5) zur Drehbetätigung aufweist und das Stellglied (4) auf einem Flanschteil (1) mit einer konzentrischen Stufe oder Absatz oder Rille gelagert ist.

2. Elastische Chassis- und/oder Gehäuselagerung gemäß Anspruch 1, dadurch gekennzeichnet, daß die Feder (2) zumindest teilweise zylindrisch ausgebildet ist.

3. Elastische Chassis- und/oder Gehäuselagerung nach Anspruch 1, dadurch gekennzeichnet, daß das Dämpfungsgummiteil (3) mit seinen zylindermantelförmigen Sektoren zwischen der Feder (2) und dem Zylindermantel des Stellgliedes (4) angeordnet ist.

4. Elastische Chassis- und/oder Gehäuselagerung nach Anspruch 2, dadurch gekennzeichnet, daß die Feder (2) innen und das Stellglied (4) außen vorgesehen sind.

5. Elastische Chassis- und/oder Gehäuselagerung nach Anspruch 2, dadurch gekennzeichnet, daß die Feder (2) außen und das Stellglied (4) innen vorgesehen sind.

6. Elastische Chassis- und/oder Gehäuselagerung gemäß einem oder mehreren der vorhergehenden Ansprüche, dadurch gekennzeichnet, daß die Feder (2) als Schraubendruckfeder ausgebildet ist.

7. Elastische Chassis- und/oder Gehäuselagerung nach Anspruch 1, dadurch gekennzeichnet, daß die Sektoren unterschiedlicher Wandstärke des Stellgliedes (4) sich über jeweils 120° erstrecken.

8. Elastische Chassis- und/oder Gehäuselagerung gemäß Anspruch 1, dadurch gekennzeichnet, daß die Sektoren des Dämpfungsgummiteils (3) jeweils 60° einnehmen.

## Claims

1. Elastic chassis and/or casing support with shock absorption for a record player, in which elastic material, such as in particular rubber and springs, interact for the uncoupling, for which purpose a spring (2) and a shock-absorbing rubber part (3) are arranged coaxially to one another, characterised in that the shock-absorbing rubber part (3) consists of a flange with cylindrically shaped segments connected integrally thereto and a cylindrically shaped actuator (4) with segments of varying wall thickness in a direction of rotation of the actuator (4) which comprises a radially projecting arm (5) for the rotation actuation, and the actuator (4) is supported on a flange part (1) with a concentric step or shoulder or groove.

2. Elastic chassis and/or casing support according to claim 1, characterised in that the spring (2) is at least partly cylindrical in shape.

3. Elastic chassis and/or casing support according to claim 1, characterised in that the shock-absorbing rubber part (3) with its cylindrically shaped sectors is disposed between the spring (2) and the cylinder of the actuator (4).

4. Elastic chassis and/or casing support according to claim 2, characterised in that the spring (2) is disposed on the inside and the actuator (4) on the outside.

5. Elastic chassis and/or casing support according to claim 2, characterised in that the spring is disposed on the outside and the actuator (4) on the inside.

6. Elastic chassis and/or casing support according to one or more of the aforegoing claims, characterised in that the spring is designed as a compression spring.

7. Elastic chassis and/or casing support according to claim 1, characterised in that the sectors of varying wall thickness of the actuator (4) extend over 120° in each case.

8. Elastic chassis and/or casing support according to claim 1, characterised in that the sectors of the shock-absorbing rubber part (3) take up 60° in each case.

## Revendications

1. Support élastique de châssis et/ou boîtier comportant un système d'amortissement, pour un lecteur de disques audio, dans lequel un matériau élastique comme par exemple du caoutchouc et des ressorts coopèrent pour réaliser le découplage et à cet effet un ressort (2) et un élément en caoutchouc d'amortissement (3) sont montés coaxiaux, caractérisé en ce que l'élément d'amortissement (3) en caoutchouc est constitué par une bride comportant des segments en forme d'enveloppes cylindriques, reliés d'un seul tenant à cette bride, et un organe de réglage en forme d'enveloppe cylindrique (4), qui comporte des segments possédant une épaisseur de paroi différente, dans un sens de rotation de l'organe de réglage (4), et possède un bras saillant radial (5) pour l'actionnement en rotation, et que l'organe de réglage est monté sur un élément de bride (1) possédant une partie étagée, un renfoncement ou une rainure concentrique.

2. Support élastique de châssis et/ou boîtier selon la revendication 1, caractérisé en ce que le ressort (2) est au moins partiellement cylindrique.

3. Support élastique de châssis et/ou boîtier selon la revendication 1, caractérisé en ce que l'élément d'amortissement (3) en caoutchouc est disposé de telle sorte que ses secteurs en forme d'enveloppes cylindriques sont situés entre le ressort (2) et l'enveloppe cylindrique de l'organe de réglage (4).

4. Support élastique de châssis et/ou boîtier selon la revendication 2, caractérisé en ce que le ressort (2) est prévu sur le côté intérieur et l'organe de réglage (4) sur le côté extérieur.

5. Support élastique de châssis et/ou boîtier selon la revendication 2, caractérisé en ce que le ressort (2) est prévu à l'extérieur et l'organe de réglage (4) à l'intérieur.

6. Support élastique de châssis et/ou boîtier selon une ou plusieurs des revendications précédentes, caractérisé en ce que le ressort (2) est réalisé sous la forme d'un ressort hélicoïdal de pression.

7. Support élastique de châssis et/ou boîtier selon la revendication 1, caractérisé en ce que les secteurs, qui possèdent des épaisseurs de paroi différentes, de l'organe de réglage (4) s'étendent chacun sur 120°.

8. Support élastique de châssis et/ou boîtier selon la revendication 1, caractérisé en ce que les secteurs de l'élément d'amortissement (3) en caoutchouc s'étendent chacun sur 60°.

EP 0 221 097 B1

Fig.1

Fig. 2

Fig. 3a

Fig. 3b